(19) Europäisches Patentamt
European Patent Office
Office européen des brevets

(11) **EP 2 816 391 A1**

(12) **EUROPEAN PATENT APPLICATION**

(43) Date of publication:
**24.12.2014 Bulletin 2014/52**

(51) Int Cl.:
*G02B 27/00* (2006.01)    *H04N 19/00* (2014.01)
*G02B 13/00* (2006.01)    *H04N 5/232* (2006.01)
*H04N 5/365* (2011.01)

(21) Application number: **14173319.6**

(22) Date of filing: **20.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.06.2013 JP 2013130922**

(71) Applicant: **Ricoh Company Ltd.**
**Tokyo 143-8555 (JP)**

(72) Inventors:
• **Sawaki, Taro**
**Tokyo 143-8555 (JP)**

• **Satoh, Hiroyuki**
**Tokyo 143-8555 (JP)**
• **Kasahara, Ryosuke**
**Tokyo 143-8555 (JP)**
• **Maruyama, Go**
**Tokyo 143-8555 (JP)**

(74) Representative: **Leeming, John Gerard**
**J A Kemp**
**14 South Square**
**Gray's Inn**
**London WC1R 5JJ (GB)**

(54) **Imaging system, image-forming optical system, image processor, and production method of the imaging system**

(57)    An imaging system includes: an image-forming optical system (202) which forms an image of a photographic subject (201); an image sensor (205) which receives light incident from the image-forming optical system (202) on a light-receiving surface, and outputs image data; and an image processor (206) which performs restoration processing on the image data outputted from the image sensor (205), wherein an effective area of a point image formed on the light-receiving surface of the image sensor (205) by the image-forming optical system (202) is configured to be sized to spread across equal to or more than 3 pixels of light-receiving pixels of the image sensor (205), and a S/N (Signal/Noise) ratio of the image sensor (205): SNR and a MTF (Modulation Transfer Function) value at a 1/2 Nyquist frequency of the image sensor (205): M satisfy Expression (A): $SNR \geq 20\log_{10}(5/M)$.

FIG.1

EP 2 816 391 A1

**Description**

The present invention relates to an imaging system, an image-forming optical system, an image processor, and a production method of the imaging system.

As an image sensor, a CCD (Charge-Coupled Device) is widely known.

Additionally, a CMOS (Complementary Metal-Oxide Semiconductor) has also been widely used.

Imaging systems having a CCD, CMOS, or the like are widely known among various imaging apparatuses.

It is known that in such imaging systems, an optical system is designed as the premise for image processing, and an image obtained by the optical system is restored as a more favorable image by restoration processing.

For example, Japanese Patent No. 4377404 discloses a method which makes it possible to obtain an image having a deep depth of field by restoring an imaged image in which an image-forming luminous flux has been regularly spread by a wavefront modulation element by digital processing.

That is, in the method disclosed in Japanese Patent No. 4377404, a blurred image is imaged by a lens in which a point spread function (PSF) is at least twice as large as a pitch of an image sensor.

Then, with respect to the imaged blurred image, an image in which blurring is corrected is obtained by using a deconvolution filter based on the PSF.

However, in a conventional imaging apparatus having a field-of-depth expanding function as disclosed in Japanese Patent Number 4377404, or the like, a S/N (Signal/Noise) ratio which an image sensor itself originally has is not considered.

In the imaged image, noise components which the image sensor has are included, and if a digital restoration processing is performed on such an image including the noise components, the noise components are also amplified.

Accordingly, the restored image may be an image in which the image quality is extremely degraded due to the amplified noise components.

An object of the present invention is to provide an imaging system which effectively reduces the influence of noise components which an image sensor has when imaging an image formed by an image-forming optical system, and which performs image restoration processing.

In order to achieve the above object, an embodiment of the present invention provides an imaging system, comprising: an image-forming optical system which forms an image of a photographic subject; an image sensor which receives light incident from the image-forming optical system on a light-receiving surface, and outputs image data; and an image processor which performs restoration processing on the image data outputted from the image sensor, wherein an effective area of a point image formed on the light-receiving surface of the image sensor by the image-forming optical system is configured to be sized to spread across equal to or more than 3 pixels of light-receiving pixels of the image sensor, and a S/N ratio of the image sensor: SNR and a MTF (Modulation Transfer Function) value at a 1/2 Nyquist frequency of the image sensor: M satisfy Expression (A): $SNR \geq 20\log_{10}(5/M)$.

In order to achieve the above object, an embodiment of the present invention provides a production method of an imaging system including an image-forming optical system which forms an image of a photographic subject; an image sensor which receives light incident from the image-forming optical system on a light-receiving surface, and outputs image data; and an image processor which performs restoration processing on the image data outputted from the image sensor, the production method of the imaging system comprising the steps of: preparing the image sensor in which a S/N (Signal/Noise) ratio: SNR is specified depending on a use environment; preparing the image-forming optical system such that an effective area of a point image projected on a light-receiving surface of the image sensor is sized to spread across equal to or more than 3 pixels of light-receiving pixels of the image sensor, and the SNR and a MTF (Modulation Transfer Function) value at a 1/2 Nyquist frequency of the image sensor: M satisfy Expression (A): $SNR \geq 20\log_{10}(5/M)$; preparing the image processor which performs restoration processing based on an OTF (Optical Transfer Function) of the image-forming optical system on the image data outputted from the image sensor; and combining the image sensor, the image-forming optical system, and the image processor.

FIG. 1 shows a block diagram explaining an imaging system according to an embodiment of the present invention.

FIG. 2 shows a diagram which illustrates an imaging lens unit in an imaging system as a practical example.

FIG. 3 shows diagrams of lateral aberration of the imaging lens unit in the practical example.

FIG. 4 shows a diagram of longitudinal aberration of the imaging lens unit in the practical example.

FIG. 5 shows diagrams of field curvature and distortion of the imaging lens unit as the practical example.

FIG. 6 shows a MTF (Modulation Transfer Function) of a subject distance: 370 mm of the imaging lens unit in the practical example.

FIG. 7 shows a MTF of a subject distance: 400 mm of the imaging lens unit in the practical example.

FIG. 8 shows a MTF of a subject distance: 430 mm of the imaging lens unit in the practical example.

FIG. 9 shows a diagram which illustrates a TFMTF (Through-Focus Modulation Transfer Function) at a 1/2 Nyquist frequency of an image sensor using the imaging lens unit in the practical example.

FIG. 10 shows diagrams explaining a relationship between a spread point spread function by spherical aberration and a pixel pitch of an image sensor.

FIG. 11 shows diagrams explaining a relationship between a point spread function by a normal image formation and a pixel pitch of an image sensor.

FIG. 12 shows a diagram which illustrates a frequency response characteristic of the Wiener filter (image-processing filter) used in the practical example.

FIG. 13 shows a diagram which illustrates a kernel filter using the Wiener filter.

FIG. 14 shows a diagram which illustrates an imaging lens unit in an imaging system as a comparison example.

FIG. 15 shows a diagram of lateral aberration of the imaging lens unit in the comparison example.

FIG. 16 shows a diagram of longitudinal aberration of the imaging lens unit in the comparison example.

FIG. 17 shows diagrams of field curvature and distortion of the imaging lens unit in the comparison example.

FIG. 18 shows a MTF of a subject distance: 370 mm of the imaging lens unit in the comparison example.

FIG. 19 shows a MTF of a subject distance: 400 mm of the imaging lens unit in the comparison example.

FIG. 20 shows a MTF of a subject distance: 430 mm of the imaging lens unit in the comparison example.

FIG. 21 shows a diagram which illustrates a TFMTF at a 1/2 Nyquist frequency of an image sensor using the imaging lens unit in the comparison example.

FIG. 22 shows a diagram which illustrates s a restoration image restored by the imaging system as the practical example.

FIG. 23 shows a diagram which illustrates a restoration image restored by the imaging system as the comparison example.

Hereinafter, an embodiment of the present invention will be explained with reference to the drawings.

The embodiment of the present invention can be employed as an imaging system of various imaging system including an image-forming optical system which is made as the premise for image processing and an image sensor, and performs image restoration processing.

Hereinafter, an imaging system which is configured as an imaging apparatus having a depth-of-field expanding function will be explained.

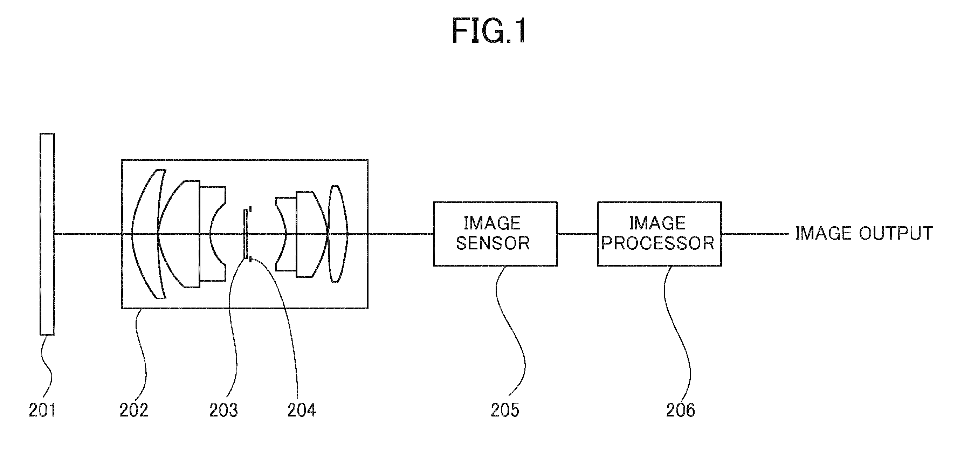

FIG. 1 shows a block diagram which illustrates an imaging system according to an embodiment of the present invention.

The imaging system includes an imaging lens unit 202, an image sensor 205, and an image processor 206, and images an image of a photographic subject 201.

As the photographic subject 201, for example, a bar code, a two-dimensional code, a character string, or the like can be included.

In this case, the imaging system is a reader for reading codes and character strings.

The photographic subject 201 can be a manufactured product as an object for product inspection.

The imaging system in this case can be adopted as a camera device for inspection.

The imaging lens unit 202 is an optical system which includes equal to or more than one lens element. A lens system constituting the imaging lens unit 202 is an image-forming optical system.

Hereinafter, the image-forming optical system is also referred to as the image-forming optical system 202.

An image of the photographic subject 201 formed on the image sensor 205 by the imaging lens unit 202 is read by the image sensor 205.

In the reader for reading codes and character strings, or the camera device for inspection, a distance between the photographic subject 201 and the imaging lens unit 202 (subject distance) easily changes.

An in-focus state refers to when an image of a photographic subject formed by the image-forming optical system 202 is formed at a position conjugate to a light-receiving surface of the image sensor 205.

When the depth of field of the image-forming optical system 202 is shallow, blurring of an image read by the image sensor 205 is likely to change greatly by a change of subject distance.

Therefore, the depth of field of the image-forming optical system 202 in an imaging system is preferably deep.

In the present embodiment, a phase plate 203 is placed in the vicinity of an aperture 204 placed in the image-forming optical system 202.

The phase plate 203 generates aberration to expand the depth of field.

That is, an image-forming luminous flux is spread by the phase plate 203 such that an effective area of a point image on the light-receiving surface of the image sensor 205 spreads across equal to or more than 3 pixels.

The effective area of the point image is an area equal to or more than an area of a $1/e^2$ width of a point spread function (PSF).

An image thus formed on the light-receiving surface of the image sensor 205 by the image-forming optical system 202 is an image of the photographic subject 201 in a state where aberration occurs.

Note that in the present embodiment, aberration control is performed by the phase plate 203; however, the phase plate 203 may not be necessarily used to perform the aberration control.

For example, in Japanese Patent Application Publication No. 2010-213274, an imaging system which expands depth of field without using a phase plate is disclosed, and the embodiment of the present invention can be also employed as an imaging system according to such an embodiment.

As the image sensor 205, a general solid-state image sensor, that is, a CCD (Charge-Coupled Device) sensor, a CMOS (Complementary Metal-Oxide Semiconductor) sensor, or the like can be used.

Image data is outputted from the image sensor 205, and the outputted image data is inputted to the image processor 206.

In the image processor 206, restoration processing is performed on the inputted image data. The restoration processing is an image processing which restores the PSF (Point Spread Function) spread by the phase plate 203.

As the image processor 206, a computer, or an integrated circuit such as an FPGA (Field-Programmable Gate Array) can be used.

In a case of using the former, the image processing can be performed by software, and in a case of using the latter, the image processing can be performed by hardware.

One feature of the embodiment of the present invention is that there is a relationship between MTF (Modulation Transfer Function) characteristics of the image-forming optical system 202 and S/N (Signal/Noise) characteristics of the image sensor 205 as follows.

$$SNR \geq 20\log_{10}(5/M) \qquad (A)$$

In the above Expression (A), "SNR" denotes a S/N (Signal/Noise) ratio of the image sensor 205, and "M" denotes a MTF (Modulation Transfer Function) value of the image-forming optical system 202 at a 1/2 Nyquist frequency (1/2 of Nyquist frequency) defined by a pixel pitch of the image sensor 205.

"M" is a value when the focus is adjusted such that the MTF value at the 1/2 Nyquist frequency becomes highest.

However, a case where the value of the S/N ratio of the image sensor 205 is low, a case where the value of the S/N ratio of the image sensor 205 may become low (for example, a case where it is extremely dark and a gain has to be increased), and the like are also considered.

Therefore, in those cases, the image-forming optical system 202 is designed such that the MTF value becomes higher.

Satisfying Expression (A) makes it possible to obtain a favorable restoration image obtained after a final image restoration processing and in which noise is suppressed.

It is preferable that a MTF value used as "M" in Expression (A) satisfy Expression (A) with respect to all image heights. However, Expression (A) only needs to be at least satisfied with respect to a center of an image (image height: 0).

The S/N ratio of the image sensor 205 is defined as follows.

The S/N ratio is defined by the following Expression (1), where "B" is an average luminance value of each pixel of an entire image, and "N" is a standard deviation of a luminance value, when an entirely uniform photographic subject is imaged.

$$SNR = 20\log_{10}(B/N) \qquad (1)$$

The S/N ratio is expressed in decibels (dB), and "B" is a S/N ratio which is not expressed in decibels (dB).

Generally, a S/N ratio of an image sensor changes depending on an environment where the image sensor is used (illuminance), an exposure time, a gain, or the like.

A value of the S/N ratio to satisfy Expression (A) is a value of the S/N ratio measured in an environment where an image sensor is actually used.

If an environment where an image sensor is used changes, the value of the S/N ratio preferably satisfies Expression (A) in every case.

However, since not every case can be actually assumed, it is only necessary to satisfy Expression (A) in a representative state where the image sensor is used.

Additionally, the S/N ratio changes depending on a color of the photographic subject 201 which is imaged; however, a value of B is set to a value for a photographic subject having a color which becomes 70% of a maximum possible luminance value for the image sensor 205.

In a case where the image sensor 205 is a color image sensor, with respect to all the imageable colors, Expression (A) is set to be satisfied.

In order to execute the imaging system shown in FIG. 1, firstly, the value of the S/N ratio of the image sensor 205 used is measured.

In a case where a S/N ratio: SNR is already known, a value thereof may be used.

In the present embodiment, a CMOS (Complementary Metal-Oxide Semiconductor) sensor having the following specification is used.

Size: 1/3 inch monochrome
Number of Pixels: 640 (horizontal)×480 (vertical)
Pixel Pitch: 7.4 $\mu$m×7.4 $\mu$m
SNR: 30 (dB)

Since a pixel pitch is 7.4 $\mu$m, a Nyquist frequency (=(1000/7.4)/2) is 67.6 cycle/mm, and a 1/2 Nyquist frequency is 33.8 cycle/mm.

Hereinafter, the image sensor having the above specification is referred to as the image sensor 205 in a practical example.

In addition, hereinafter, the image sensor 205 indicates the image sensor 205 in the practical example unless otherwise specified.

In a case where such an image sensor 205 in the practical example is used, the image-forming optical system 202 needs to be designed to satisfy Expression (A).

That is, the image-forming optical system 202 needs to be designed such that a MTF (Modulation Transfer Function) value is equal to or more than 0.16 at the 1/2 Nyquist frequency: 33.8 cycle/mm.

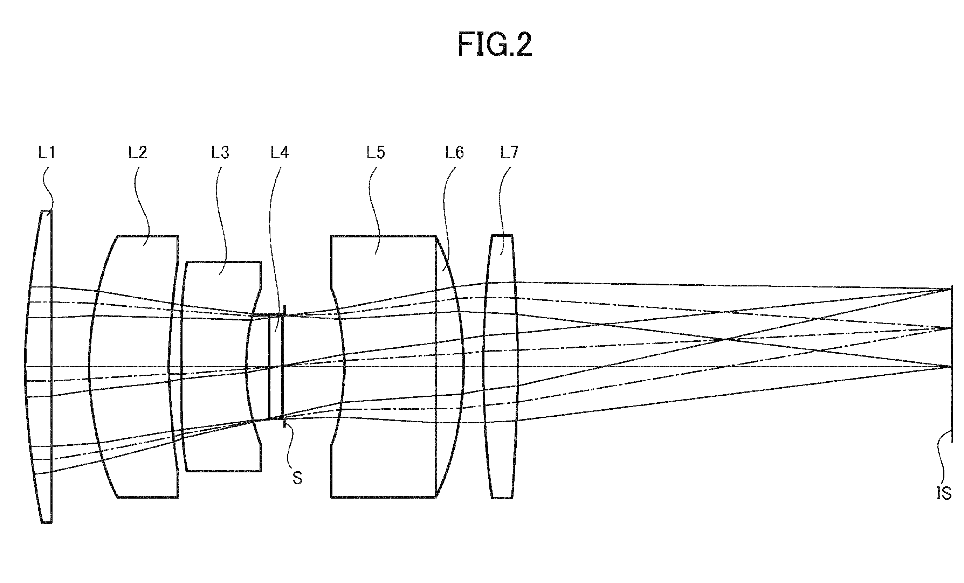

In FIG. 2, a lens structure of a specific example of the image-forming optical system 202 (hereinafter, referred to as the image-forming optical system 202 in the practical example) thus designed is shown.

An imaging system in which the image sensor 205 in the practical example and the image-forming optical system 202 in the practical example are combined is referred to as simply the practical example (imaging system as the practical example).

In FIG. 2, a left side is an object side (that is, a photographic subject side), and a right side is an image plane side (that is, an image sensor side). In FIG. 2, reference signs L1 to L3, and L5 to L7 denote lens elements, and reference sign S denotes an aperture.

Additionally, reference sign IS denotes a light-receiving surface of the image sensor 205, and an image plane of the image-forming optical system 202 in the practical example.

Reference sign L4 denotes a phase plate which generates aberration to expand the depth of field.

That is, the image-forming optical system 202 in the practical example has a 7-element structure which also includes the phase plate L4, and a surface of the aperture S is a ninth surface which is numbered in order from the object side to the image plane side.

The phase plate L4 is provided to intentionally apply spherical aberration to an image-forming optical system.

In an optical system which expands the depth of field, generally, as also shown in FIG. 2, a phase plate which applies spherical aberration is arranged in the vicinity of an aperture.

Data of the image-forming optical system 202 in the practical example is shown in Table 1.

[Table 1]

|  | | Type | Curvature | Thickness | Glass | Semi-Diameter |
|---|---|---|---|---|---|---|
| | 1 | STANDARD | 3. 51E-02 | 9.99E-01 | LASF016 | 6.00E+00 |
| | 2 | STANDARD | 0.00E+00 | 1.48E+00 | | 6.00E+00 |
| | 3 | STANDARD | 8.21E-02 | 3.14E+00 | LASF015 | 5.00E+00 |
| | 4 | STANDARD | 4.25E-02 | 5.00E-01 | | 4.00E+00 |
| | 5 | STANDARD | 2.79E-02 | 2.57E+00 | SFL6 | 4.00E+00 |
| | 6 | STANDARD | 1.19E-01 | 9.00E-01 | | 3.00E+00 |
| | 7 | STANDARD | 0.00E+00 | 5.00E-01 | BK7 | 2.00E+00 |
| | 8 | ASPHERE | 0.00E+00 | 1.00E-01 | | 2.00E+00 |
| | APERTURE | STANDARD | 0.00E+00 | 2.31E+00 | | 1.97E+00 |
| | 10 | STANDARD | -1.09E-01 | 3.64E+00 | SF15 | 3.00E+00 |
| | 11 | STANDARD | -4.72E-03 | 1.11E+00 | LASF016 | 5.00E+00 |

(continued)

|  | Type | Curvature | Thickness | Glass | Semi-Diameter |
|---|---|---|---|---|---|
| 12 | STANDARD | -8.28E-02 | 7.63E-01 |  | 5.00E+00 |
| 13 | STANDARD | 3.07E-02 | 1.40E+00 | LASF015 | 5.00E+00 |
| 14 | STANDARD | -1.75E-02 | 1.72E+01 |  | 5.00E+00 |

In Table 1, "Type" means a shape of a surface, "STANDARD" means that the shape of the surface is a standard spherical surface, or a flat surface.

Additionally, "ASPHERE" means that the shape of the surface is aspherical.

"Curvature" is curvature of a surface, and a reciprocal thereof is a curvature radius. Note that curvature in an aspherical surface is paraxial curvature.

"Thickness" means an interval between surfaces.

"Glass" means a type of glass material, and "Semi-Diameter" means an effective radius of each surface. Quantities with a dimension of length are expressed in millimeters (mm).

In Table 1, for example, "3.07E-02" means "$3.07 \times 10^{-2}$".

As is clear from Table 1, in an imaging lens unit in the practical example (image-forming optical system 202 in the practical example), only a surface on a side of the aperture S (surface on the image plane side) of the phase plate L4 is an aspherical surface.

The aspherical surface is expressed by a polynomial expression of an axial curvature radius and a distance from an optical axis: h.

Data (aspherical data) which defines an aspherical surface of an 8th surface of the image-forming optical system 202 in the practical example (surface on the image plane side of the phase plate L4) is shown in Table 2.

[Table 2]

| Surf | 8 |
|---|---|
| Type | Aspheric |
| Normalized Radius | 1.97E+00 |
| $h^2$ | 2.08E-03 |
| $h^3$ | 0.00E+00 |
| $h^4$ | -4.79E-03 |
| $h^5$ | 0.00E+00 |
| $h^6$ | 0.00E+00 |
| $h^7$ | 0.00E+00 |
| $h^8$ | 0.00E+00 |
| $h^9$ | 0.00E+00 |
| $h^{10}$ | 0.00E+00 |

In Table 2, "Surf", "Aspheric", and "Normalized Radius" mean surface, aspherical surface, and normalized paraxial curvature radius, respectively.

A shape of the aspherical surface is expressed by the following polynomial expression.

$$Z = \Sigma a_n (|h/r|)^n \qquad n = 2 \text{ to } 10$$

In this polynomial expression, "r" is the above "Normalized Radius", and "h" is the distance from the optical axis.

In Table 2, $h^2$ to $h^{10}$ represent second order to 10th order, and values of coefficients with respect to those orders are expressed in the right column.

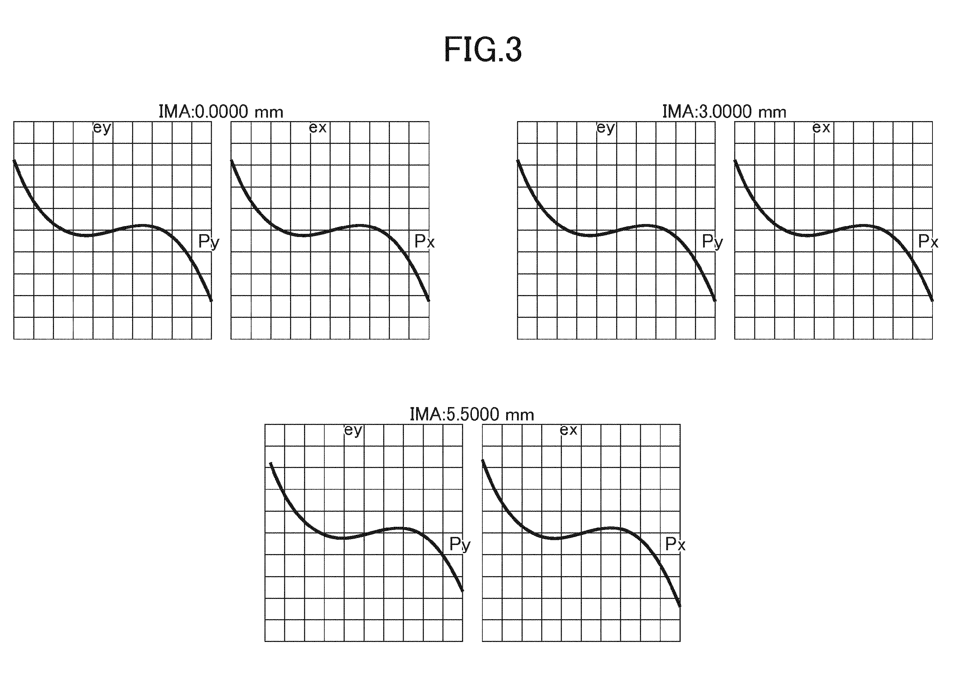

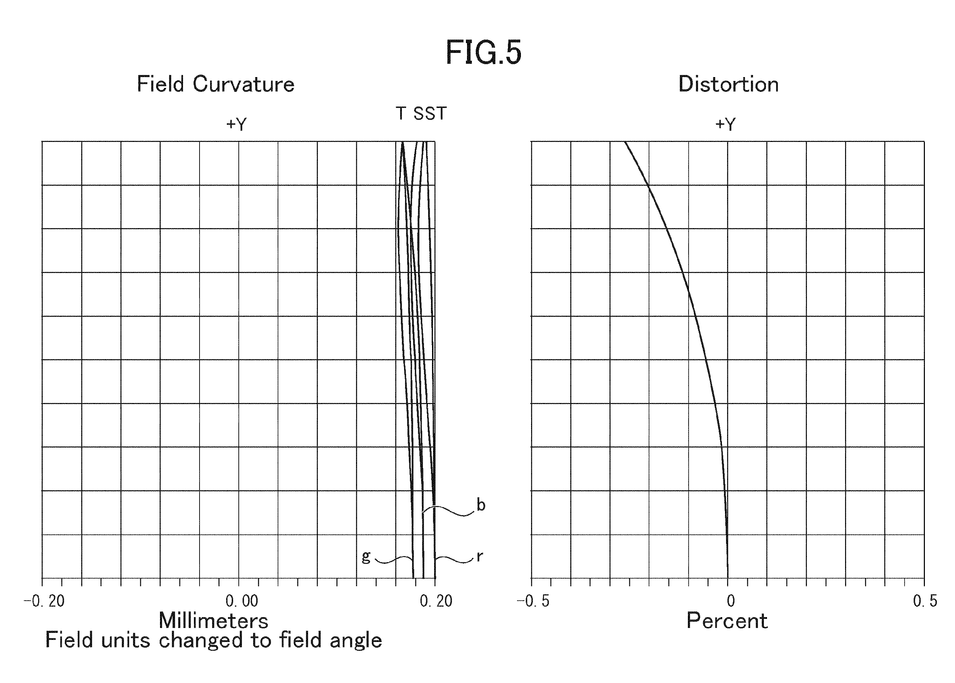

A diagram of lateral aberration, a diagram of longitudinal aberration, and diagrams of field curvature and distortion of the image-forming optical system 202 in the practical example are shown in FIGs. 3, 4, and 5, respectively.

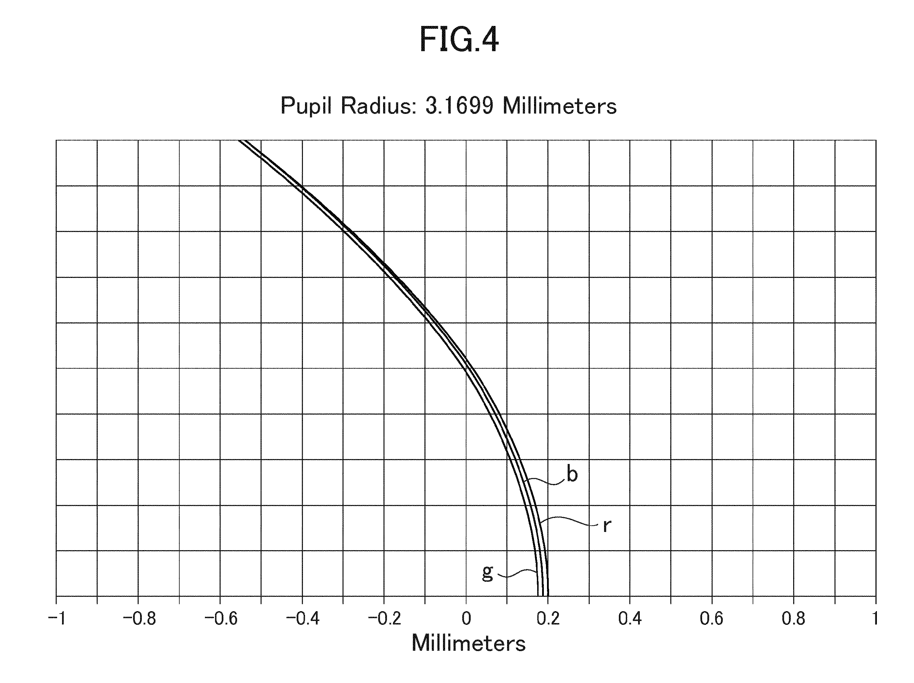

"IMA" in FIG. 3 denotes an image height in an image plane. "Pupil Radius" in FIG. 4 denotes a radius of an entrance pupil.

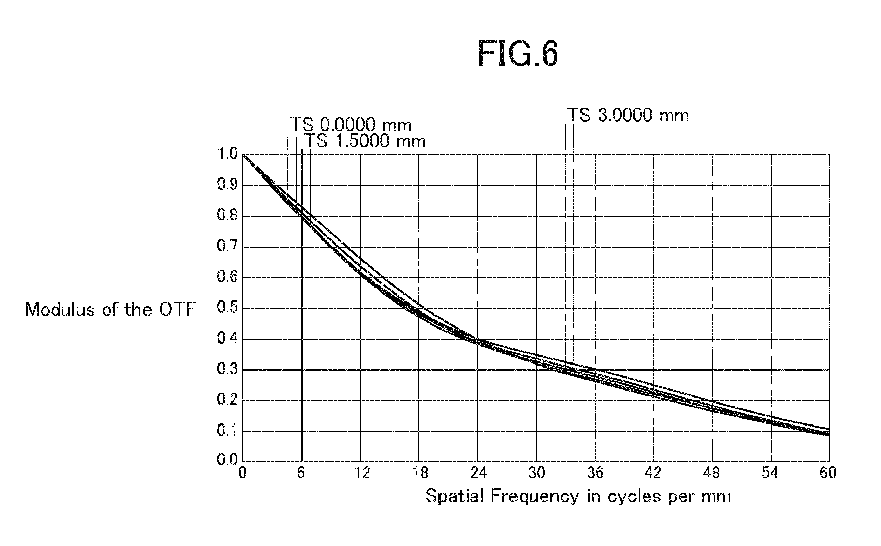

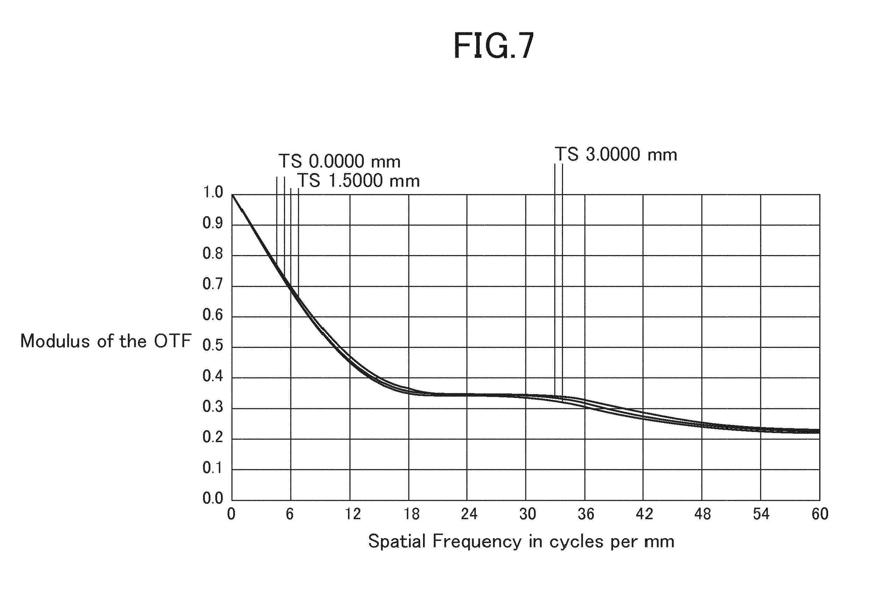

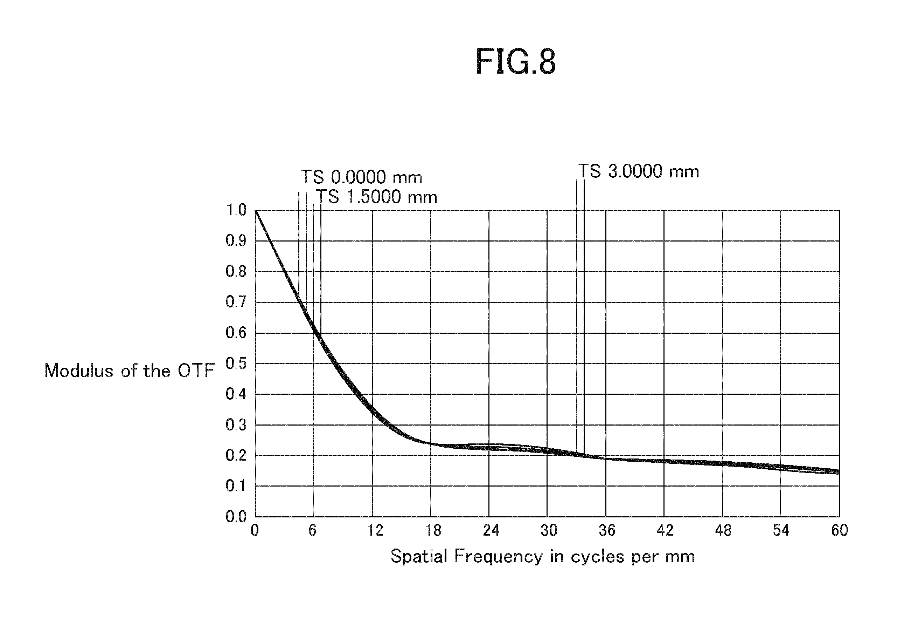

Additionally, a MTF of the practical example in regard to each of subject distances: 370 mm, 400 mm, and 430 mm is shown in each of FIGs. 6, 7, and 8.

Wavelengths: 656 nm (denoted by "r"), 588 nm (denoted by "g"), and 286 nm (denoted by "b") are illustrated in those diagrams.

Regarding the lateral aberration and the distortion, aberration curves with respect to r, g, and b are not substantially separated from each other, but are overlapped with each other.

As is clear from the diagram of the longitudinal aberration shown in FIG. 4, a large spherical aberration which is equal to or more than 0.7 mm occurs. This is influenced by the phase plate L4.

By such a large spherical aberration, the point spread function (PSF) spreads, and the MTF lowers.

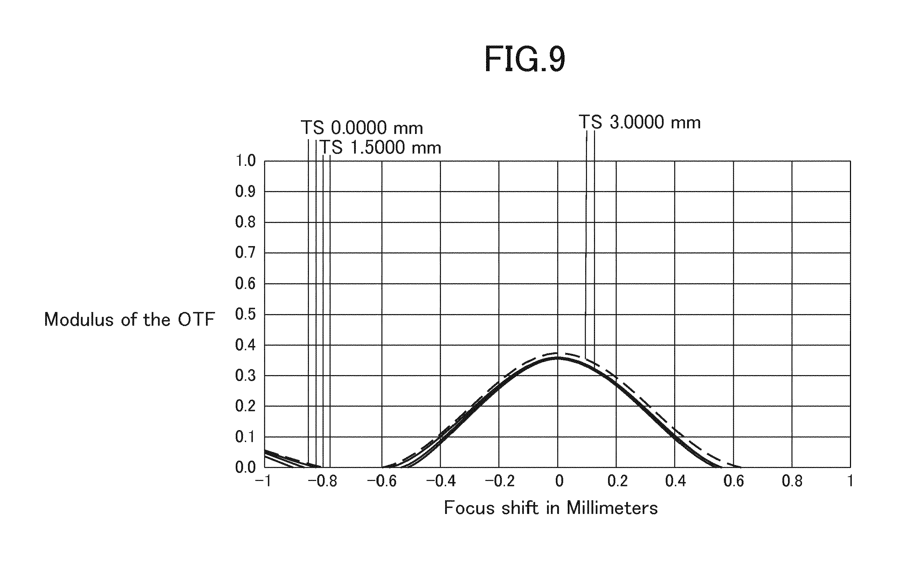

In FIG. 9, a diagram of a Through-Focus MTF (TFMTF) at the 1/2 Nyquist frequency (33.8 cycle/mm) of the image sensor 205 having the above specification is shown.

A horizontal axis in the diagram expresses a focus shift amount on the image plane, and a vertical axis in the diagram expresses the MTF.

In the diagram, T denotes "tangential", and S denotes "saggital", and each of 0.0000 mm, 1.5000 mm, and 3.0000 mm is an image height.

As is clear from FIG.9, maximum values of the MTF are equal to or more than 0.35 with respect to all the image heights (image height from 0 to ±3.0 mm), which are more than a right-side value of Expression (A), which is 0.16.

In principle, a MTF value at the 1/2 Nyquist frequency is preferably more than 0.16 with respect to all the image heights; however, at least, it only needs to be more than 0.16 with respect to the center of the image.

This is because, as described later, in a case of designing restoration processing in the image processor 206, it is designed based on characteristics of the center of the image.

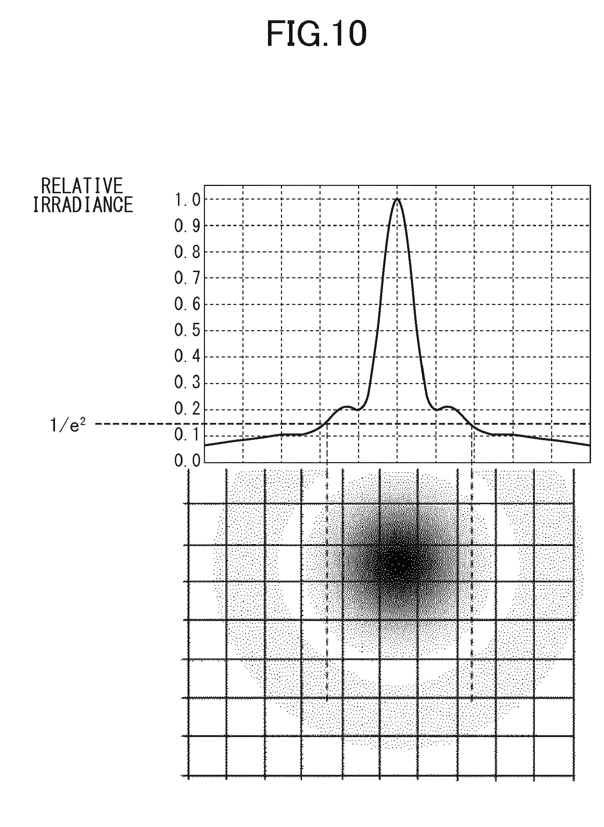

FIG. 10 shows diagrams explaining a relationship between a point spread function (PSF) and a pixel pitch of an image sensor.

In an upper diagram of FIG. 10, a profile of the PSF is shown, and in a lower diagram of FIG. 10, a state where the PSF spreads and distributes on a light-receiving surface of the image sensor as a light-receiving element is shown.

As shown in the lower diagram of FIG. 10, the PSF spreads across equal to or more than 3 pixels of light-receiving pixels of the image sensor.

An effective area of a point image is an area of a $(1/e^2)$ width of the PSF as shown in the upper diagram of FIG. 10, and the effective area spreads across 5 pixels as shown in the lower diagram of FIG. 10.

In the imaging system according to the embodiment of the present invention, for the imaging lens unit as the image-forming optical system, the effective area of the point image on the light-receiving surface of the image sensor needs to spread across equal to or more than 3 pixels.

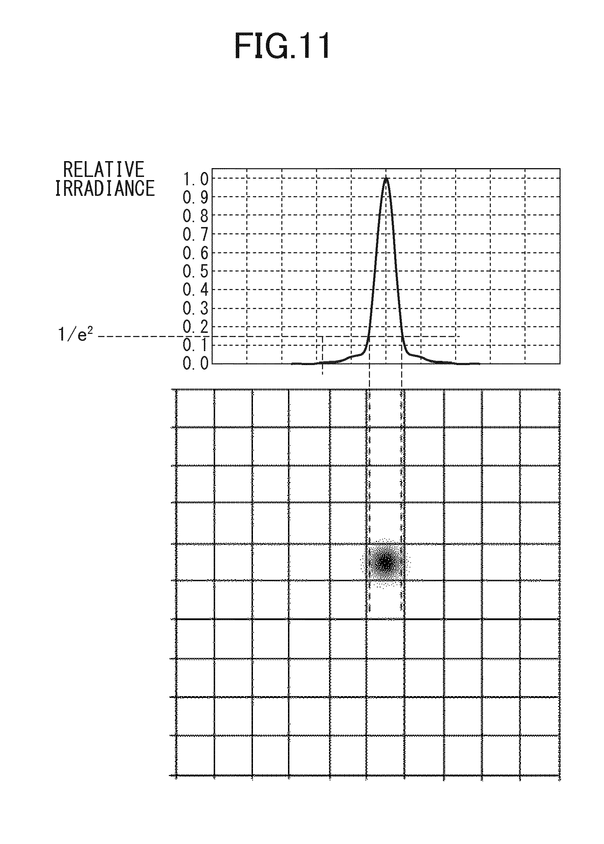

Note that in a general imaging apparatus, as shown in FIG. 11, an image-forming optical system is designed such that an effective area of a point image is within 1 pixel.

As described above, in the imaging system according to the embodiment of the present invention, spherical aberration of the image-forming optical system 202 is intentionally increased, and the effective area of the point image on the light-receiving surface of the image sensor 205 is spread across equal to or more than 3 pixels.

And then on the image data outputted from the image sensor 205, restoration processing is performed by the image processor 206.

As the restoration processing, a general image processing such as an inverse filter processing, or Wiener filter processing can be used.

Hereinafter, a case of restoration processing using the Wiener filter will be explained.

Note that the Wiener filter processing is disclosed in "Computer Image Processing by Hideyuki Tamura", and the like.

The Wiener filter is expressed by Expression (2).

$$R(u,\ v)=H^{*}(u,\ v)/[|H(u,\ v)|^{2}+\{W(u,\ v)/S(u,\ v))\}^{2}]\quad(2)$$

In Expression (2), the meaning of each of R, H, H*, S, u, and v is as follows.

R: image-processing filter (Wiener filter)
H: OTF (Optical Transfer Function) of an optical system
H*: conjugate complex amount of H
$S^2$: power spectrum of a photographic subject

$W^2$: power spectrum of an inherent noise in a sensor
u: spatial frequency in the horizontal direction
v: spatial frequency in the vertical direction
OTF: H (u, v) can be obtained by design data of the image-forming optical system 202.
OTF values of the image-forming optical system 202 in the practical example are almost the same in a center of an image and at an edge of the image.

Therefore, the OTF value in the center of the image is taken as a representative value, and an image-processing filter is designed.

By using an image-processing filter thus designed, the same image processing is performed on an entire image (the whole of an image constructed by the image data).

Note that there may be an image-forming optical system in which the OTF values change depending on image heights, for example, an image-forming optical system in which performance at an edge of an image is poor, and the OTF value is deteriorated.

In such a case, an image-processing filter is designed depending on an image height, and therefore, an image-processing filter used can be changed depending on a position of an image.

W(u, v) and S(u, v) can be approximated from a S/N ratio of an image sensor.

That is, if it is approximated that a power spectrum of a photographic subject and a power spectrum of noise do not have frequency characteristics, B/N in Expression (1) is equal to S/W.

The S/N ratio: SNR of the image sensor 205 in the practical example is 30 dB, and therefore, when the S/N ratio in decibels (dB) is converted to a usual ratio, B/N=31.6.

When a relationship of B/N≈S/W is used, $W^2/S^2 (=1/(31.6)^2)$ is 0.001.

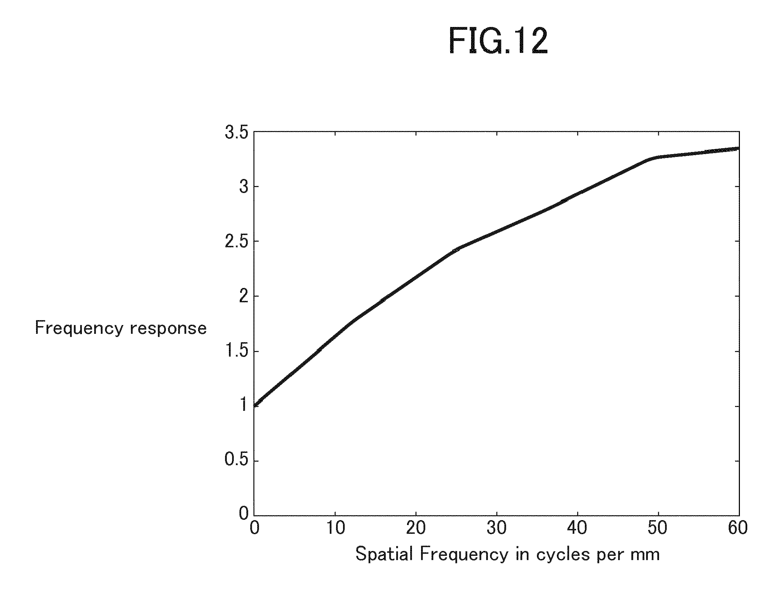

By using this, when calculating the Wiener filter (image-processing filter), a frequency response characteristic thereof is as shown in FIG. 12. In FIG. 12, a horizontal axis expresses a spatial frequency, and a vertical axis expresses a gain.

It is actually a two-dimensional image-processing filter; however, only one dimension is shown here.

A MTF of a restoration image after image processing has a profile in which a MTF of an image-forming optical system is multiplied by a characteristic of an image-processing filter, and the MTF lowered by the spherical aberration is corrected.

However, on the other hand, noise components included in image data are also amplified by image processing.

If noise is assumed to be complete white noise and unchanged depending on a photographic subject, a value in which values of an image-processing filter R with respect to entire spatial frequencies are averaged is an amplification factor of the noise.

When averaging the values of the image-processing filter R designed as above, it is approximately 3.2, and it is clear that the noise is amplified approximately 3.2 times by the image-processing filter R.

When calculating based on the above, a S/N ratio of the restoration image after image processing lowers to approximately 20 dB from 30dB of an original S/R ratio of the image sensor 205.

Generally, in an image in which a S/N ratio is below 15dB, there are great many noise components, and the image may not be a practical one.

Therefore, between a S/N ratio of the image sensor 205: SNR and a gain G by image processing, a relationship expressed by the following Expression (3) is preferably established.

$$SNR - G \geq 15 \qquad (3)$$

In Expression (3), G is an average value of image-processing filter characteristics on a frequency space defined by the following Expression (4), which is expressed in decibels (dB).

$$G = 20\log_{10}[\Sigma\Sigma R(u,\ v)] \qquad (4)$$

A double sum ($\Sigma\Sigma$) of a right-side value of Expression (4) is calculated with respect to each of spatial frequencies: u, v.

In the embodiment of the present invention, an image-forming optical system is designed with consideration of a S/N ratio of an image sensor in an actual use environment.

Therefore, it is possible to prevent the S/N ratio of the restoration image after image processing from lowering.

When Expressions (1) to (4) and an approximate relationship: B/N≈S/W are used, the following Expression (B)

is obtained.

$$\mathrm{SNR}-20\log_{10}\{\Sigma\Sigma\mathrm{H}^{*}(u, v)/[|\mathrm{H}(u, v)|^{2}+\{10^{-\mathrm{SNR}/10}\}]\}\geq 15 \qquad (B)$$

A left side of Expression (B) expresses the S/N ratio of the restoration image after image processing. A second part of the left side expresses a S/N ratio which is lowered by image restoration processing.

In the present practical example, a left-side value of Expression (B) is approximately 20 as described above, and is larger than a right-side value of Expression (B), which is 15.

An image-processing filter given by Expression (2) is an image-processing filter in a spatial frequency area.

Needless to say, the image-processing filter given by Expression (2) as it is can be used for the image restoration processing; however, the scale of processing increases, and processing time is likely to be lengthened.

Therefore, in an actual image processing using the Wiener filter, Fourier transform is performed on the above image-processing filter, and a kernel filter having variables in real space is preferably made.

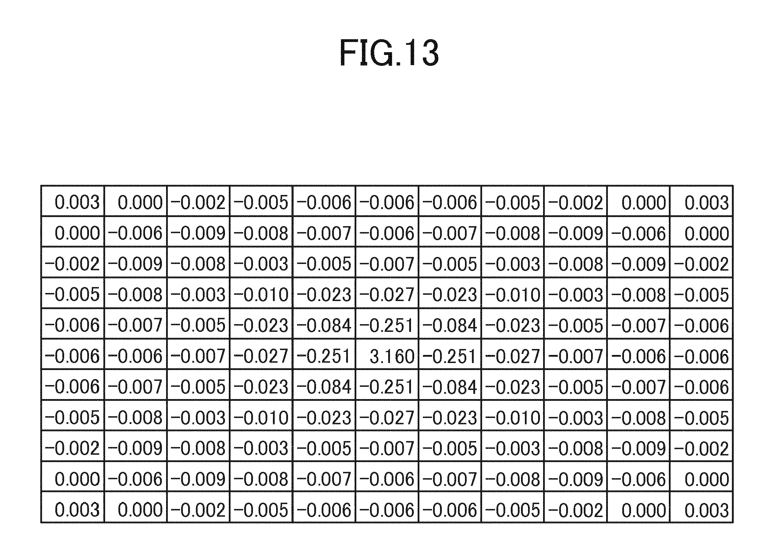

A kernel filter in a case of using the image-forming optical system 202 in the practical example and the image sensor 205 in the practical example is shown in FIG. 13.

The kernel filter has 11 rows×11 columns, and is used for a 11×11 pixel array.

That is, in the image-forming optical system 202 in the practical example, an effective area of a point image on a light-receiving surface of the image sensor 205 spreads across 11 pixels both in the horizontal and vertical directions.

Restoration processing by the kernel filter will be briefly explained.

In a two-dimensional array of image data outputted by the image sensor 205, an data element in an Ith-row and Jth-column array is expressed as IM(I, J).

A filter element in an ith-row and jth-row array of the kernel filter is expressed as K(i, j), where i=-5 to +5, and j=-5 to +5. In this case, a filter element in the center of the kernel filter is K(0, 0).

With respect to an arbitrary data element in the image data: IM(I, J), a filter element K(0, 0) is overlapped.

And then, a product of a data element: IM(I-m, J-n) and a filter element: K(i, j) is calculated, where m=-5 to +5, and n=-5 to +5.

A sum of products of 11×11 data elements thus obtained is restoration image data in the Ith-row and Jth-column array of restoration image data.

The restoration image data can be obtained by performing the above calculation with respect to all the elements of the image data.

The imaging system as the practical example explained above has the image-forming optical system 202 which forms an image of the photographic subject 201, and the image sensor 205 which receives light incident from the image-forming optical system 202, and outputs image data.

Additionally, the imaging system also has the image processor 206 which performs restoration processing on the image data outputted from the image sensor 205.

The effective area of the point image formed on the light-receiving surface of the image sensor 205 by the image-forming optical system 202 is configured to be sized to spread across equal to or more than 3 pixels of the light-receiving pixels of the image sensor 205.

The S/N ratio of the image sensor 205: SNR and the MTF value of the image-forming optical system 202 at the 1/2 Nyquist frequency: M satisfy the following Expression (A): $\mathrm{SNR}\geq 20\log_{10}(5/M)$.

The OTF of the image-forming optical system 202: H(u, v) and the S/N ratio of the image sensor 205: SNR satisfy the following Expression (B): $\mathrm{SNR}-20\log_{10}\{\Sigma\Sigma\mathrm{H}^*(u, v)/[|\mathrm{H}(u, v)|^2+\{10^{-\mathrm{SNR}}\}]\}\geq 15$.

A value obtained by subtracting a S/N ratio of image data after restoration processing is performed in the image processor 206 from the S/N ratio of the image data outputted from the image sensor 205 is larger than a value of $20\log_{10}\{\Sigma\Sigma\mathrm{H}^*(u, v)/[|\mathrm{H}(u, v)|^2+\{10^{-\mathrm{SNR}/10}\}]\}$.

Additionally, the imaging system according to the embodiment explained above expands the depth of field of the image-forming optical system (imaging lens unit) 202.

That is, the image-forming optical system 202 is configured such that spherical aberration is intentionally applied, and a change of the effective area of the point image in accordance with a change of the subject distance is lowered.

The image-forming optical system 202 has the phase plate 203 (the phase plate L4 of the image-forming optical system 202 in the practical example illustrated in FIG. 2) which intentionally applies spherical aberration.

That is, the image-forming optical system 202 used in the imaging system as the practical example satisfies the following Expression (A). [0141]

$$(A) \qquad SNR \geq 20\log_{10}(5/M)$$

M denotes the MTF value at the 1/2 Nyquist frequency of the image sensor 205, and SNR denotes the S/N ratio of the image sensor 205.

Additionally, with respect to the S/N ratio of the image sensor 205 in the practical example, the OTF of the image-forming optical system 202 in the practical example: H(u, v) satisfies the following Expression (B).

$$(B) \quad SNR - 20\log_{10}\{\Sigma\Sigma H^{*}(u, v)/[|H(u, v)|^{2} + \{10^{-SNR/10}\}]\} \geq 15$$

The image-forming optical system 202 in the practical example has the phase plate 203 (phase plate L4) which lowers the change of the effective area of the point image in accordance with the change of the subject distance.

The image processor 206 performs the restoration processing using the Wiener filter on the image data outputted from the image sensor 205.

In this case, the restoration processing can be performed by using a kernel filter in which the Wiener filter is Fourier-transformed.

Hereinafter, an imaging system as a comparison example will be explained.

Also in the comparison example, as an image sensor, an image sensor having the same specification as the image sensor 205 in the practical example is used. That is, a S/N ratio of the image sensor is 30 dB.

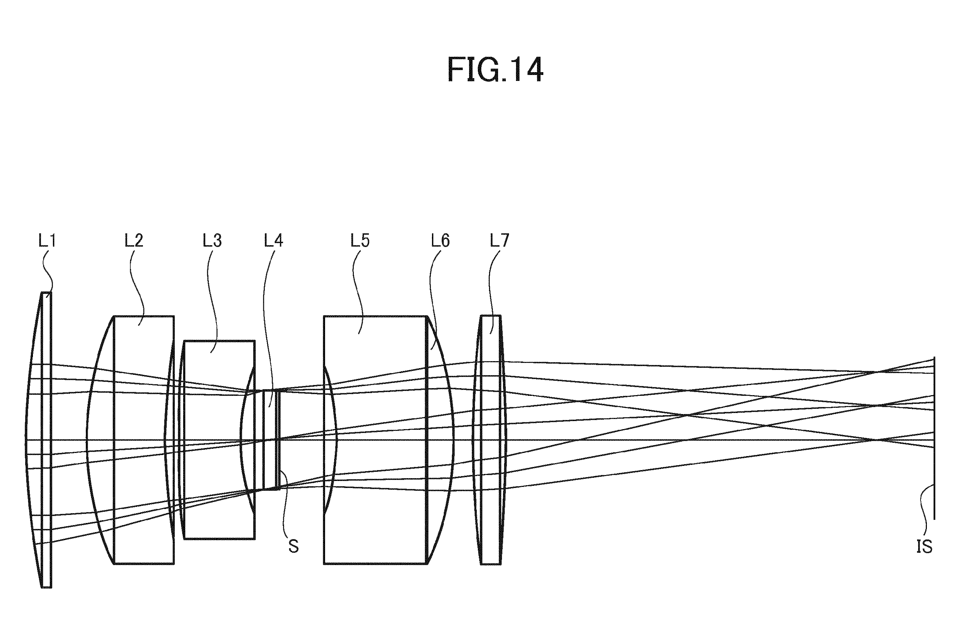

As an image-forming optical system in the comparison example, an image-forming optical system shown in FIG. 14 is used.

In order to avoid complication, the same reference signs as those in FIG. 2 are added to lens elements shown in FIG. 14.

The image-forming optical system in the comparison example also has a 7-element structure, and reference signs L1 to L3, and L5 to L7 denote lens elements, and reference sign L4 denotes a phase plate. Reference sign IS denotes an image plane.

A surface on an image plane side of the phase plate L4 is aspherical.

Data of the image-forming optical system in the comparison example is shown in Table 3 after the fashion of Table 1.

[Table 3]

|  | Type | Curvature | Thickness | Glass | Semi-Diameter |
|---|---|---|---|---|---|
| 1 | STANDARD | 3.51E-02 | 9.99E-01 | LASF016 | 6.00E+00 |
| 2 | STANDARD | 0.00E+00 | 1.48E+00 |  | 6.00E+00 |
| 3 | STANDARD | 8.21E-02 | 3.14E+00 | LASF015 | 5.00E+00 |
| 4 | STANDARD | 4.25E-02 | 5.00E-01 |  | 4.00E+00 |
| 5 | STANDARD | 2.79E-02 | 2.57E+00 | SFL6 | 4.00E+00 |
| 6 | STANDARD | 1.19E-01 | 9.00E-01 |  | 3.00E+00 |
| 7 | STANDARD | 0.00E+00 | 5.00E-01 | BK7 | 2.00E+00 |
| 8 | ASPHERE | 0.00E+00 | 1.00E-01 |  | 2.00E+00 |
| APERTURE | STANDARD | 0.00E+00 | 2.31E+00 |  | 1.97E+00 |
| 10 | STANDARD | -1.09E-01 | 3.64E+00 | SF15 | 3.00E+00 |
| 11 | STANDARD | -4.72E-03 | 1.11E+00 | LASF016 | 5.00E+00 |
| 12 | STANDARD | -8.28E-02 | 7.63E-01 |  | 5.00E+00 |
| 13 | STANDARD | 3.07E-02 | 1.40E+00 | LASF015 | 5.00E+00 |
| 14 | STANDARD | -1.75E-02 | 1.72E+01 |  | 5.00E+00 |

Aspherical data of the surface on the image plane side of the phase plate L4 is shown in Table 4 after the fashion of Table 2.

[Table 4]

| Surf | 8 |
|---|---|
| Type | Aspheric |
| Normalized Radius | 1.97E+00 |
| $h^2$ | 6.00E-03 |
| $h^3$ | 0.00E+00 |
| $h^4$ | -2.00E-02 |
| $h^5$ | 0.00E+00 |
| $h^6$ | 0.00E+00 |
| $h^7$ | 0.00E+00 |
| $h^8$ | 0.00E+00 |
| $h^9$ | 0.00E+00 |
| $h^{10}$ | 0.00E+00 |

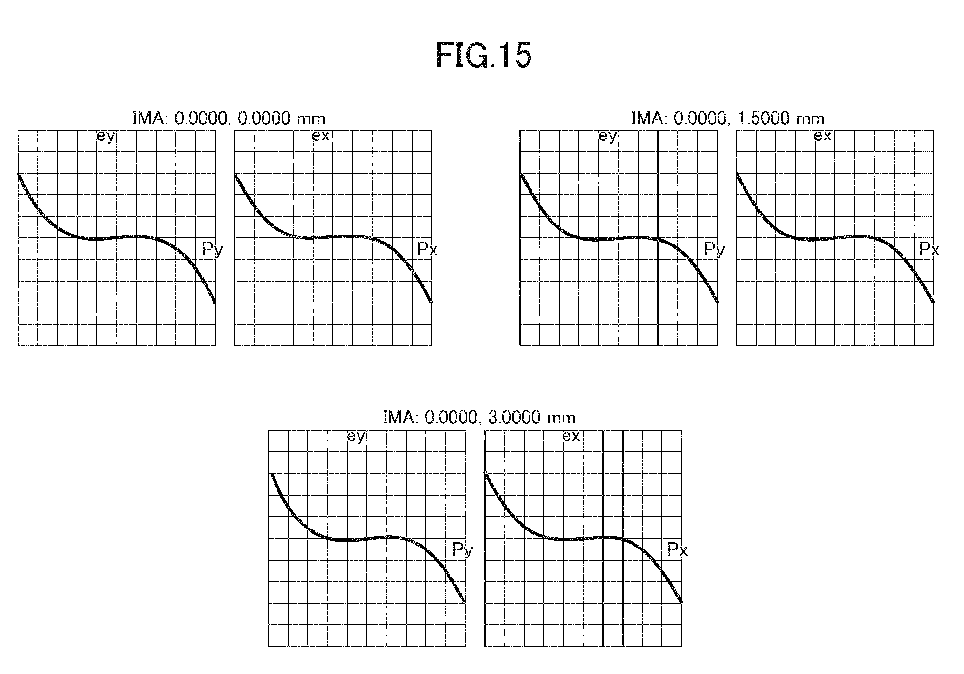

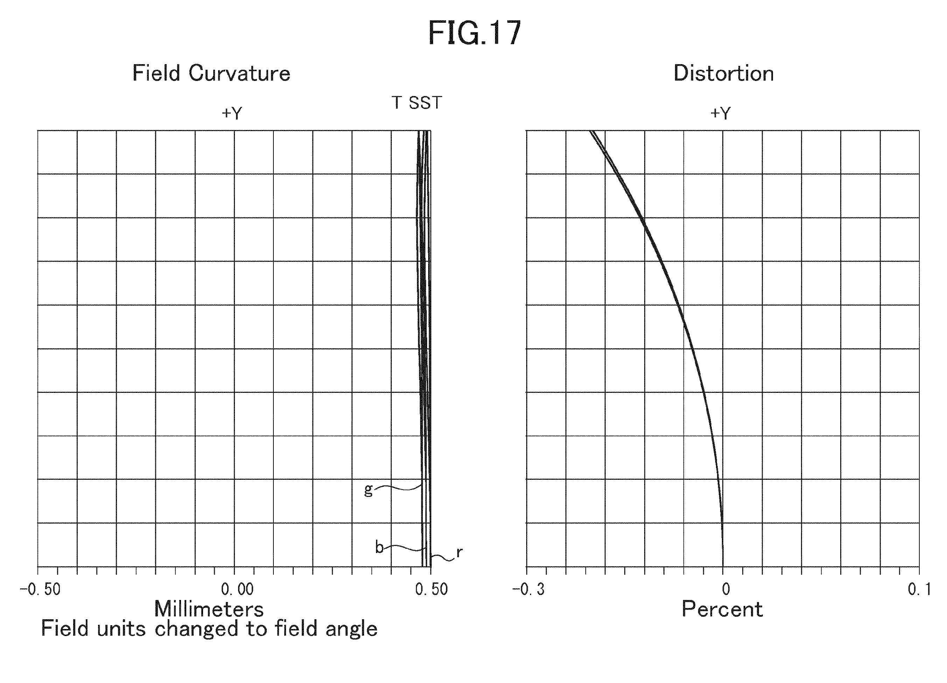

A diagram of lateral aberration, a diagram of longitudinal aberration, and diagrams of field curvature and distortion are shown in FIGs. 15, 16, and 17, respectively. As shown in the diagram of the longitudinal aberration, spherical aberration is approximately 2.8 mm.

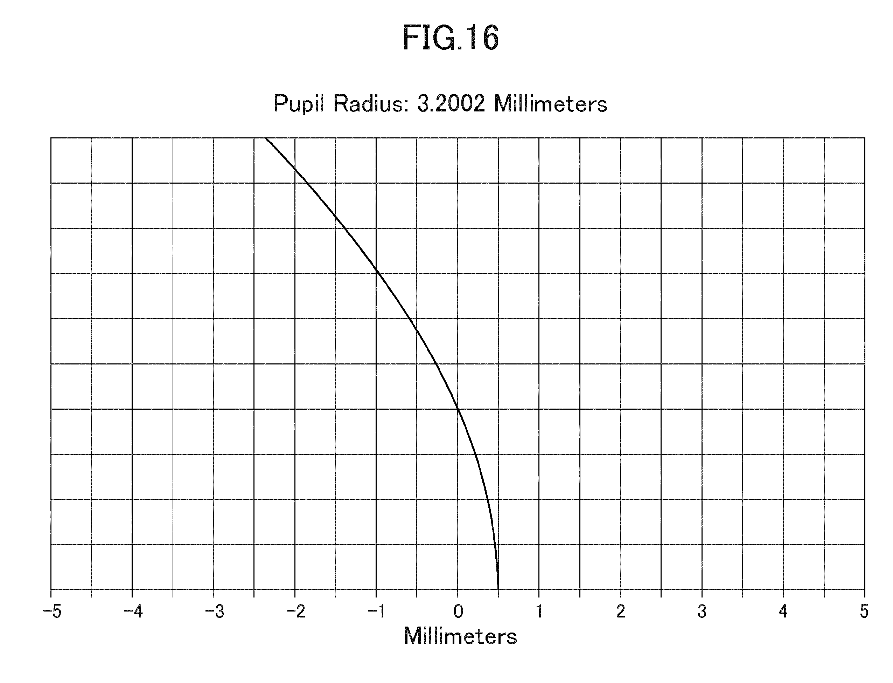

"IMA" in FIG. 15 denotes an image height in an image plane. "Pupil Radius" in FIG. 16 denotes a radius of an entrance pupil.

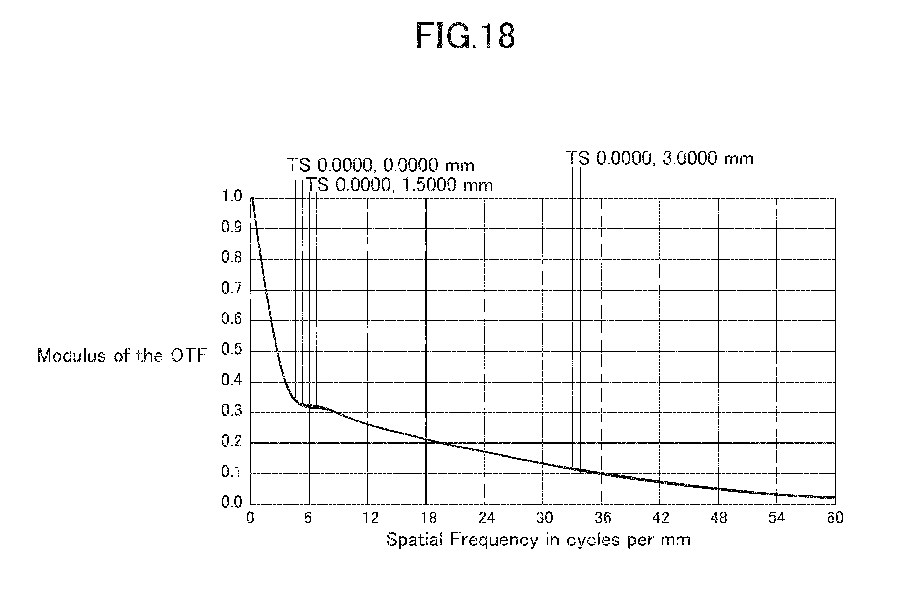

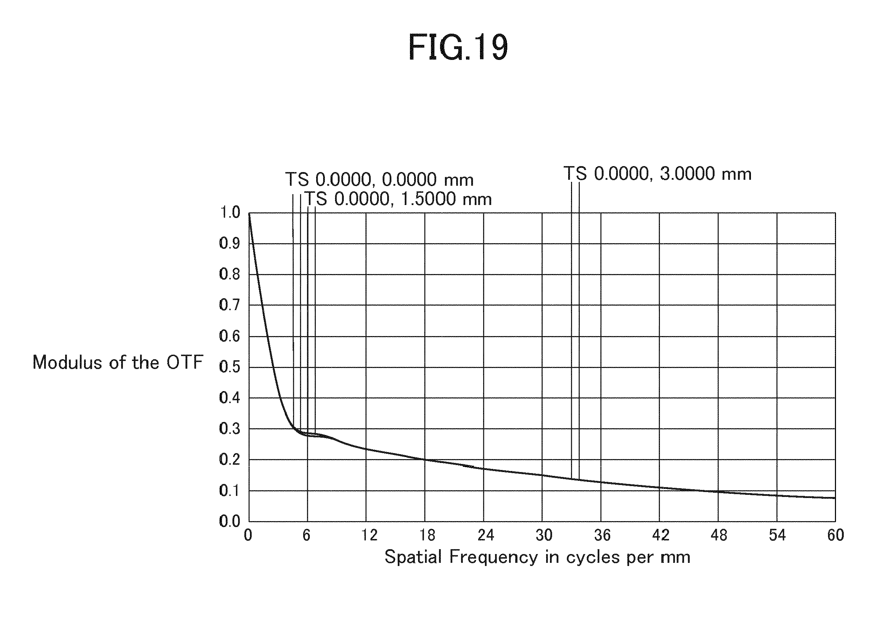

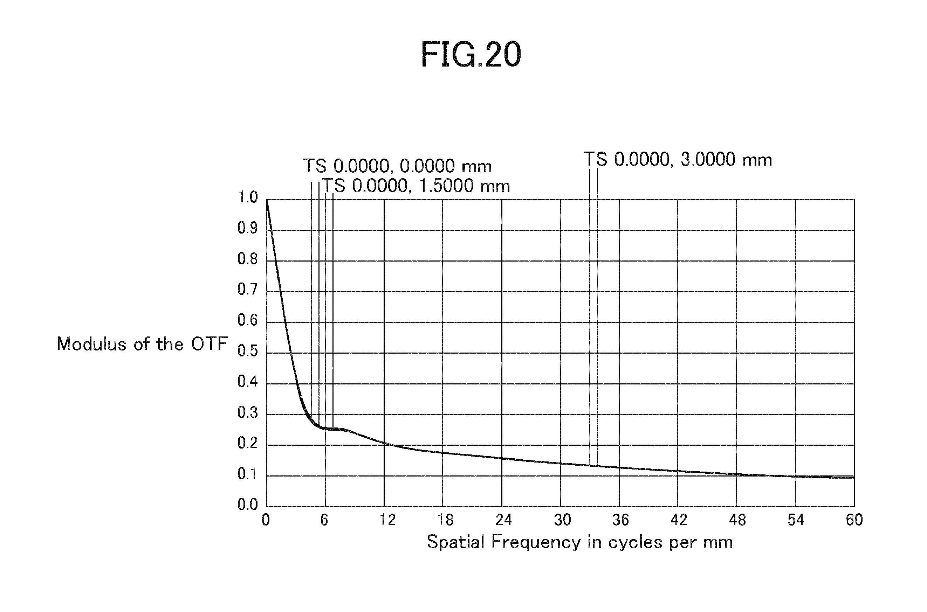

A MTF (Modulation Transfer Function) of the comparison example in regard to each of subject distances: 370 mm, 400 mm, and 430 mm is shown in each of FIGs. 18, 19, and 20.

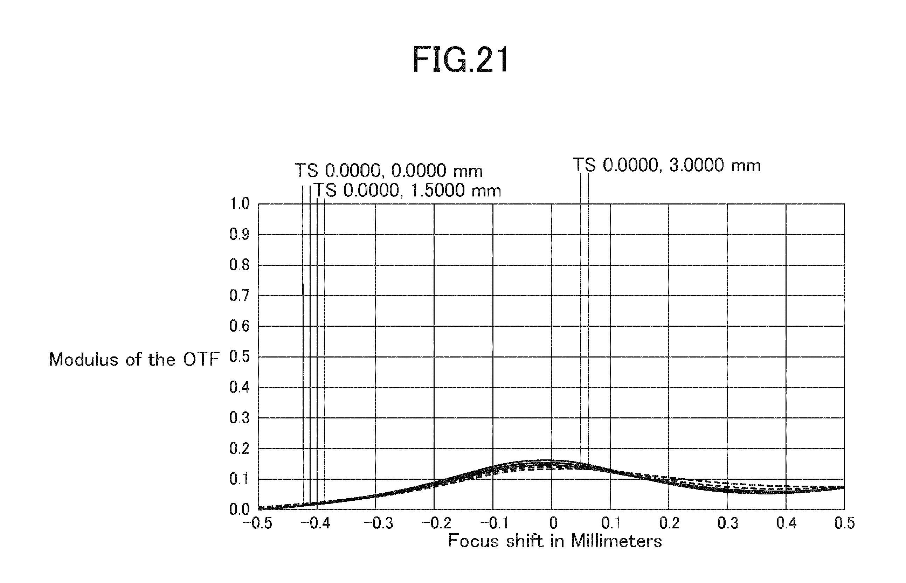

In FIG. 21, a TFMTF (Through-Focus MTF) of the image-forming optical system in the comparison example at the 1/2 Nyquist frequency (33.8 cycle/mm) of the image sensor 205 is shown after FIG. 9.

As shown in FIG. 21, in the image-forming optical system in the comparison example, even if a focus position is adjusted, a MTF value at the 1/2 Nyquist frequency is equal to or less than 0.15.

That is, in the image-forming optical system in the comparison example, a value of a left side of Expression (A) is larger than 30, and Expression (A) is not satisfied.

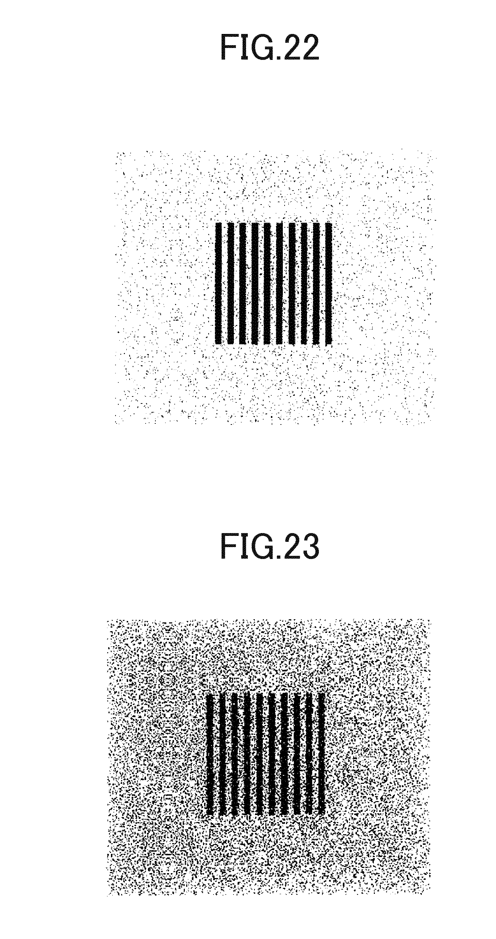

If an image-processing filter is designed similar to a case of the imaging system of the practical example, an image-processing filter which has characteristics shown in FIG. 22 can be made.

A value G which is calculated from this image-processing filter is approximately 19, and a S/N ratio of a finally-obtained restoration image after image processing is approximately 11 dB.

This may be an image in which noise components are extremely large, which is not useful.

Restoration images actually image-processed are shown in FIGs. 22 and 23.

FIG. 22 shows a restoration image obtained by the imaging system as the practical example, and FIG. 23 shows a restoration image obtained by the imaging system as the comparison example. Photographic subjects are the same.

As is clear from comparing both of the restoration images, the restoration image obtained by the imaging system as the comparison example is an unclear image in which the S/N ratio is small (noise components are large).

The restoration image obtained by the imaging system as the practical example is an image with high quality in which the S/N ratio is large and noise components are not noticed.

The basis of an imaging system according to an embodiment of the present invention is that with respect to an image sensor, an image-forming optical system satisfies Expression (A).

For the image-forming optical system, an effective area of a point image formed on a light-receiving surface of the image sensor is required to be sized to spread across equal to or more than 3 pixels of light-receiving pixels of the image sensor.

Here, for the image-forming optical system, a capability of forming an image with high quality is not required from the beginning, but the image-forming optical system is designed and made as the premise for correcting an image read by the image sensor.

In other words, if the above requirements are satisfied, a capability of the image-forming optical system does not necessarily need to be high.

Therefore, the image-forming optical system used in the imaging system according to the embodiment of the present invention can be made inexpensively and easily.

In the imaging system as the practical example, as the image-forming optical system, an image-forming optical system in which spherical aberration is intentionally increased is used.

The purpose of intentionally increasing the spherical aberration is as follows.

That is, in the image-forming optical system in which the spherical aberration is increased, the effective area of the point image formed on the light-receiving surface of the image sensor hardly changes if the subject distance slightly moves from the in-focus state.

Accordingly, in a case of performing the restoration processing by using the Wiener filter, even if the subject distance moves from the in-focus state, it is possible to perform the restoration processing with one type of image-processing filter.

That is, image processing to perform restoration is simplified.

Steps to make the imaging system according to the embodiment of the present invention are as follows.

(a) A step of preparing an image sensor in which a S/N ratio: SNR is specified depending on a use environment.

(b) A step of preparing an image-forming optical system such that an effective area of a point image projected on a light-receiving surface of the image sensor is sized to spread across equal to or more than 3 pixels of light-receiving pixels of the image sensor, and the SNR and a MTF (Modulation Transfer Function) value at a 1/2 Nyquist frequency of the image sensor: M satisfy the following Expression (A): $SNR \geq 20\log_{10}(5/M)$.

(c) A step of preparing an image processor which performs restoration processing based on an OTF (Optical Transfer Function) of the image-forming optical system on an image outputted from the image sensor.

(d) A step of combining the image sensor, the image-forming optical system, and the image processor.

According to the embodiment of the present invention, it is possible to achieve an imaging system which effectively lowers the influence of noise components which an image sensor which images an image formed by an image-forming optical system has, and performs image restoration processing.

Although the present invention has been described in terms of exemplary embodiments, it is not limited thereto. It should be appreciated that variations may be made in the embodiments described by persons skilled in the art without departing from the scope of the present invention as defined by the following claims.

## Claims

1. An imaging system, comprising:

   an image-forming optical system (202) which forms an image of a photographic subject (201);
   an image sensor (205) which receives light incident from the image-forming optical system (202) on a light-receiving surface, and outputs image data; and
   an image processor (206) which performs restoration processing on the image data outputted from the image sensor (205),

   wherein an effective area of a point image formed on the light-receiving surface of the image sensor (205) by the image-forming optical system (202) is configured to be sized to spread across equal to or more than 3 pixels of light-receiving pixels of the image sensor (205), and
   a S/N (Signal/Noise) ratio of the image sensor (205): SNR and a MTF (Modulation Transfer Function) value at a 1/2 Nyquist frequency of the image sensor (205): M satisfy Expression (A): $SNR \geq 20\log_{10}(5/M)$.

2. The imaging system according to Claim 1, wherein an OTF (Optical Transfer Function) of the image-forming optical system (202): H(u, v) and the S/N ratio of the image sensor (205): SNR satisfy Expression (B): $SNR - 20\log_{10}\{\sum\sum H^*(u, v)/[|H(u, v)|^2 + \{10^{-SNR/10}\}]\} \geq 15$.

3. The imaging system according to Claim 2, wherein a value obtained by subtracting a S/N ratio of image data after restoration processing is performed in the image processor (206) from the S/N ratio of the image data outputted from the image sensor (205) is larger than a value of $20\log_{10}\{\sum\sum H^*(u, v)/[|H(u, v)|^2 + \{10^{-SNR/10}\}]\}$.

4. The imaging system according to any one of Claims 1 to 3, wherein depth of field of the image-forming optical system (202) is expanded.

5. The imaging system according to Claim 4, wherein the image-forming optical system (202) is an image-forming optical system to which spherical aberration is intentionally applied, and which lowers a change of the effective area of the point image in accordance with a change of a subject distance.

6. The imaging system according to Claim 5, wherein the image-forming optical system (202) has a phase plate (203, L4) which intentionally applies the spherical aberration.

7. An image-forming optical system (202) used in the imaging system according to any one of Claims 1 to 6, wherein the MTF value at the 1/2 Nyquist frequency of the image sensor (205): M, with respect to the S/N ratio of the image sensor (205): SNR, satisfies Expression (A): $SNR \geq 20\log_{10}(5/M)$.

8. The image-forming optical system (202) according to Claim 7, wherein with respect to the S/N ratio of the image sensor (205) : SNR, the OTF: H(u, v) satisfies Expression (B): $SNR - 20\log_{10}\{\sum\sum H^*(u, v)/[|H(u, v)|^2 + \{10^{-SNR/10}\}]\} \geq 15$.

9. The image-forming optical system (202) according to Claim 7 or Claim 8, comprising: the phase plate (203, L4) which intentionally applies the spherical aberration, and lowers the change of the effective area of the point image in accordance with the change of the subject distance.

10. An image processor (206) used in the imaging system according to any one of Claims 1 to 6, wherein restoration processing using the Wiener filter is performed on the image data outputted from the image sensor (205).

11. The image processor (206) according to Caim 10, wherein the restoration processing is performed by using a kernel filter in which the Wiener filter is Fourier-transformed.

12. A production method of an imaging system including an image-forming optical system (202) which forms an image of a photographic subject (201); an image sensor (205) which receives light incident from the image-forming optical system (202) on a light-receiving surface, and outputs image data; and an image processor (206) which performs restoration processing on the image data outputted from the image sensor (205),
the production method of the imaging system comprising the steps of:

preparing the image sensor (205) in which a S/N (Signal/Noise) ratio: SNR is specified depending on a use environment;
preparing the image-forming optical system (202) such that an effective area of a point image projected on a light-receiving surface of the image sensor (205) is sized to spread across equal to or more than 3 pixels of light-receiving pixels of the image sensor (205), and the SNR and a MTF (Modulation Transfer Function) value at a 1/2 Nyquist frequency of the image sensor (205): M satisfy Expression (A): $SNR \geq 20\log_{10}(5/M)$;
preparing the image processor (206) which performs restoration processing based on an OTF (Optical Transfer Function) of the image-forming optical system (202) on the image data outputted from the image sensor (205); and
combining the image sensor (205), the image-forming optical system (202), and the image processor (206).

# FIG.1

201  202  203  204     205     206

IMAGE
SENSOR

IMAGE
PROCESSOR

IMAGE OUTPUT

EP 2 816 391 A1

FIG.2

L1    L2    L3    L4    L5    L6    L7

S

IS

EP 2 816 391 A1

# FIG.3

IMA:3.0000 mm

ey          ex          Px          Py

IMA:0.0000 mm

ey          ex          Px          Py

IMA:5.5000 mm

ey          ex          Px          Py

# FIG.4

## Pupil Radius: 3.1699 Millimeters

Millimeters

EP 2 816 391 A1

# FIG.5

Field Curvature

Distortion

+Y

T SST

+Y

g    b

r

-0.20          0.00          0.20

Millimeters

Field units changed to field angle

-0.5          0          0.5

Percent

EP 2 816 391 A1

# FIG.6

TS 0.0000 mm
TS 1.5000 mm
TS 3.0000 mm

Modulus of the OTF

Spatial Frequency in cycles per mm

EP 2 816 391 A1

# FIG.7

EP 2 816 391 A1

# FIG.8

Modulus of the OTF vs Spatial Frequency in cycles per mm

TS 0.0000 mm
TS 1.5000 mm
TS 3.0000 mm

# FIG.9

EP 2 816 391 A1

# FIG.10

# FIG.11

RELATIVE IRRADIANCE

1/e²

# FIG.12

EP 2 816 391 A1

## FIG.13

| 0.003 | 0.000 | -0.002 | -0.005 | -0.006 | -0.006 | -0.006 | -0.005 | -0.002 | 0.000 | 0.003 |
|---|---|---|---|---|---|---|---|---|---|---|
| 0.000 | -0.006 | -0.009 | -0.008 | -0.007 | -0.006 | -0.007 | -0.008 | -0.009 | -0.006 | 0.000 |
| -0.002 | -0.009 | -0.008 | -0.003 | -0.005 | -0.007 | -0.005 | -0.003 | -0.008 | -0.009 | -0.002 |
| -0.005 | -0.008 | -0.003 | -0.010 | -0.023 | -0.027 | -0.023 | -0.010 | -0.003 | -0.008 | -0.005 |
| -0.006 | -0.007 | -0.005 | -0.023 | -0.084 | -0.251 | -0.084 | -0.023 | -0.005 | -0.007 | -0.006 |
| -0.006 | -0.006 | -0.007 | -0.027 | -0.251 | 3.160 | -0.251 | -0.027 | -0.007 | -0.006 | -0.006 |
| -0.006 | -0.007 | -0.005 | -0.023 | -0.084 | -0.251 | -0.084 | -0.023 | -0.005 | -0.007 | -0.006 |
| -0.005 | -0.008 | -0.003 | -0.010 | -0.023 | -0.027 | -0.023 | -0.010 | -0.003 | -0.008 | -0.005 |
| -0.002 | -0.009 | -0.008 | -0.003 | -0.005 | -0.007 | -0.005 | -0.003 | -0.008 | -0.009 | -0.002 |
| 0.000 | -0.006 | -0.009 | -0.008 | -0.007 | -0.006 | -0.007 | -0.008 | -0.009 | -0.006 | 0.000 |
| 0.003 | 0.000 | -0.002 | -0.005 | -0.006 | -0.006 | -0.006 | -0.005 | -0.002 | 0.000 | 0.003 |

FIG.14

FIG.15

IMA: 0.0000, 0.0000 mm

IMA: 0.0000, 1.5000 mm

IMA: 0.0000, 3.0000 mm

ey ex Py Px

# FIG.16

Pupil Radius: 3.2002 Millimeters

Millimeters

EP 2 816 391 A1

# FIG.17

Field Curvature

+Y    T SST

Distortion

+Y

-0.50    0.00    0.50

Millimeters

Field units changed to field angle

-0.3    0    0.1

Percent

EP 2 816 391 A1

# FIG.18

EP 2 816 391 A1

# FIG.19

EP 2 816 391 A1

# FIG.20

Modulus of the OTF

TS 0.0000, 0.0000 mm
TS 0.0000, 1.5000 mm
TS 0.0000, 3.0000 mm

Spatial Frequency in cycles per mm

EP 2 816 391 A1

# FIG.21

EP 2 816 391 A1

# FIG.22

# FIG.23

Europäisches
Patentamt
European
Patent Office
Office européen
des brevets

## EUROPEAN SEARCH REPORT

Application Number

EP 14 17 3319

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 228 677 A1 (GLOBAL BIONIC OPTICS PTY LTD [AU]) 15 September 2010 (2010-09-15)<br>* figure 1 *<br>* paragraphs [0037], [0059], [0060] *<br>----- | 1-12 | INV.<br>G02B27/00<br>H04N19/00<br>G02B13/00<br>H04N5/232<br>H04N5/365 |
| X | US 2013/120550 A1 (CHEN YUNG-LIN [TW] ET AL) 16 May 2013 (2013-05-16)<br>* paragraphs [0053], [0054] *<br>----- | 1-12 | |
| X | US 2009/128665 A1 (YONEYAMA KAZUYA [JP]) 21 May 2009 (2009-05-21)<br>* paragraphs [0180], [0185] *<br>* figures 9-11 *<br>----- | 1-12 | |
| X | US 2005/204329 A1 (PAUCA PAU L [US] ET AL) 15 September 2005 (2005-09-15)<br>* paragraphs [0098], [0114], [0127] *<br>----- | 1-12 | |
| X | EP 2 328 007 A1 (CDM OPTICS INC [US]) 1 June 2011 (2011-06-01)<br>* claim 1 *<br>----- | 1-12 | TECHNICAL FIELDS SEARCHED (IPC)<br><br>G02B<br>H04N |

The present search report has been drawn up for all claims

| Place of search | Date of completion of the search | Examiner |
|---|---|---|
| Munich | 29 October 2014 | de Lajarte, Gilles |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                              

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 14 17 3319

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2014

| Patent document cited in search report | | | Publication date | Patent family member(s) | | Publication date |
|---|---|---|---|---|---|---|
| EP 2228677 | A1 | 15-09-2010 | CN | 101840056 | A | 22-09-2010 |
| | | | EP | 2228677 | A1 | 15-09-2010 |
| | | | JP | 2010213274 | A | 24-09-2010 |
| | | | US | 2010225759 | A1 | 09-09-2010 |
| US 2013120550 | A1 | 16-05-2013 | CN | 103105361 | A | 15-05-2013 |
| | | | TW | 201319614 | A | 16-05-2013 |
| | | | US | 2013120550 | A1 | 16-05-2013 |
| US 2009128665 | A1 | 21-05-2009 | CN | 101437104 | A | 20-05-2009 |
| | | | JP | 2009122514 | A | 04-06-2009 |
| | | | TW | 200931095 | A | 16-07-2009 |
| | | | US | 2009128665 | A1 | 21-05-2009 |
| US 2005204329 | A1 | 15-09-2005 | NONE | | | |
| EP 2328007 | A1 | 01-06-2011 | CN | 101288013 | A | 15-10-2008 |
| | | | CN | 102147853 | A | 10-08-2011 |
| | | | EP | 1927025 | A2 | 04-06-2008 |
| | | | EP | 2328006 | A1 | 01-06-2011 |
| | | | EP | 2328007 | A1 | 01-06-2011 |
| | | | JP | 5033802 | B2 | 26-09-2012 |
| | | | JP | 2009512882 | A | 26-03-2009 |
| | | | KR | 20080049121 | A | 03-06-2008 |
| | | | US | 2010272327 | A1 | 28-10-2010 |
| | | | WO | 2008008084 | A2 | 17-01-2008 |

EPO FORM P0459

For more details about this annex : see Official Journal of the European Patent Office, No. 12/82

**REFERENCES CITED IN THE DESCRIPTION**

**Patent documents cited in the description**

- JP 4377404 B
- JP 2010213274 A